# EUROPÄISCHE PATENTANMELDUNG

(11) **EP 1 498 307 A2**
(43) Veröffentlichungstag der Anmeldung: **19.01.2005**
(21) Anmeldenummer: 04014853.8
(22) Anmeldetag: 24.06.2004
(51) Int. Cl.: B60N 3/02

(54) **Lager für einen Fahrzeug-Haltegriff sowie Haltegriff**

(30) Priorität: 16.07.2003 DE 20310944 U
(71) Anmelder: TRW Automotive Electronics & Components GmbH & Co. KG, 67677 Enkenbach/Alsenborn (DE)
(72) Erfinder: Meyer, Francis, 67500 Maguenau (FR); Wagner, Jörg, 67661 Kaiserslautern (DE); Krause, Reinhard, 95615 Marktredwitz-Brand (DE)
(74) Vertreter: Sties, Jochen, Dipl.-Ing.

(57) **Zusammenfassung**

Ein Lager (10, 12) für einen Fahrzeug-Haltegriff, mit einem Montageteil (16, 18), das dafür vorgesehen ist, am Fahrzeug befestigt zu werden, einem Lagerteil (20, 22), das dafür vorgesehen ist, mit einem Griffteil (14) verbunden zu werden, und einer Lagerachse (36), mittels der das Lagerteil (20, 22) drehbar am Montageteil (16, 18) gelagert ist, ist dadurch gekennzeichnet, daß die Lagerachse einstückig mit dem Montageteil (16, 18) ausgeführt und in das Lagerteil (20, 22) drehbar eingegossen ist.

## Beschreibung

Die Erfindung betrifft ein Lager für einen Fahrzeug-Haltegriff, mit einem Montageteil, das dafür vorgesehen ist, am Fahrzeug befestigt zu werden, einem Lagerteil, das dafür vorgesehen ist, mit einem Griffteil verbunden zu werden, und einer Lagerachse, mittels der das Lagerteil drehbar am Montageteil gelagert ist.

Bisher werden das Montageteil und das Lagerteil als separate Bauteile hergestellt und anschließend montiert, indem die Lagerachse in das Montageteil eingesetzt wird. Die insgesamt hohe Anzahl von einzelnen Komponenten führt zu einem hohen Montageaufwand und hohen Kosten. Außerdem sind Fehlmontagen möglich. Schließlich ist die Öffnung für die Lagerachse im Montageteil von außen sichtbar, was die Optik beeinträchtigt.

Die Aufgabe der Erfindung besteht darin, ein Lager der eingangs genannten Art dahingehend weiterzubilden, daß sich eine vereinfachte Herstellung und damit geringere Kosten ergeben.

Zur Lösung dieser Aufgabe ist erfindungsgemäß vorgesehen, daß die Lagerachse einstückig mit dem Montageteil ausgeführt und in das Lagerteil drehbar eingegossen ist. Die beiden Bauteile werden also bereits fertig montiert hergestellt, beispielsweise indem zuerst das Lagerteil mit einer Lageröffnung für die Lagerachse spritzgegossen wird und in einem zweiten Schritt das Montageteil spritzgegossen wird, wobei die Lagerachse unmittelbar in die Lageröffnung des Lagerteils eingespritzt wird. Es ist also nicht mehr notwendig, die Lagerachse als separates Bauteil vorzuhalten und zu montieren. Damit entfällt auch die Gefahr einer Fehlmontage. Außerdem ist keine von außen sichtbare Öffnung im Montageteil für die Lagerachse mehr erforderlich.

Zur Herstellung der Lagerachse mittels Spritzgießen im Inneren des Montageteils kann ein Verfahren verwendet werden, wie es aus der DE 33 40 122 A1 bekannt ist, auf die hinsichtlich des Herstellungsverfahrens in vollem Umfang Bezug genommen wird. Bei diesem Verfahren wird kurz zusammengefaßt ein erstes Spritzgußteil in einer ersten Form gefertigt. Dann wird das erste Spritzgußteil aus der ersten Form entnommen und in eine zweite Form verbracht. Dabei härtet das erste Spritzgußteil so weit aus und gewinnt so weit an Festigkeit, daß ein Spritzgußmaterial in die zweite Form eingespritzt werden kann, das beispielsweise ein Öffnung des ersten Spritzgußteils ausfüllt und darin zu einem zweiten Spritzgußteil aushärtet. Das zweite Spritzgußteil ist dann in dem ersten Spritzgußteil beweglich, kann jedoch unlösbar mit diesem verbunden sein. In jedem Fall ergibt sich der wesentliche Vorteil, daß das zweite Spritzgußteil nicht am ersten montiert werden muß.

Die Erfindung betrifft auch einen Haltegriff mit zwei Lagern und einem Griffteil, das mit den beiden Lagerteilen verbunden ist.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 in einer perspektivischen Ansicht einen Haltegriff bestehend aus Griffteil und zwei Lagern;
- Figur 2 den Haltegriff von Fig. 1 in einer Explosionsansicht;
- Figur 3 in einer Seitenansicht eines der Lager des Haltegriffs von Fig. 1;
- Figur 4 einen Schnitt entlang der Ebene IV-IV von Fig. 3;
- Figur 5 in einer Seitenansicht das andere Lager des Haltegriffs von Fig. 1;
- Figur 6 einen Schnitt entlang der Ebene VI-VI von Fig. 5;
- Figur 7 das Lagerteil des in Fig. 3 gezeigten Lagers vor der Anbringung einer Rückstellfeder;
- Figur 8 das Lagerteil von Fig. 7 mit angebrachter Rückstellfeder;
- die Figuren 9 und 10 in perspektivischen Ansichten die Rückstellfeder von Fig. 7;
- die Figuren 11 und 12 in perspektivischen Ansichten eine Rückstellfeder gemäß einer Variante;
- Figur 13 in einer perspektivischen Ansicht das Lager von Fig. 5 vor der Anbringung eines Dämpfers;
- Figur 14 das Lager von Fig. 13 in einer weiteren perspektivischen Ansicht;
- Figur 15 das Lager von Fig. 13 kurz vor der Anbringung eines Dämpfers;
- Figur 16 in einer perspektivischen Ansicht ein Montageteil gemäß einer alternativen Ausführungsform; und
- Figur 17 in einer perspektivischen Ansicht ein Lager mit einem Montageteil gemäß einer wiederum weiteren Ausführungsform.

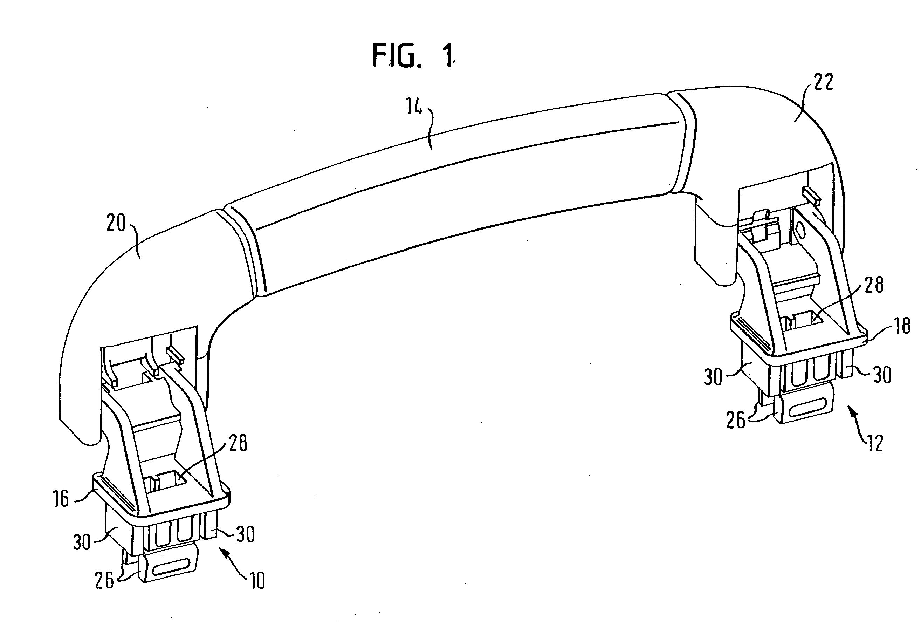

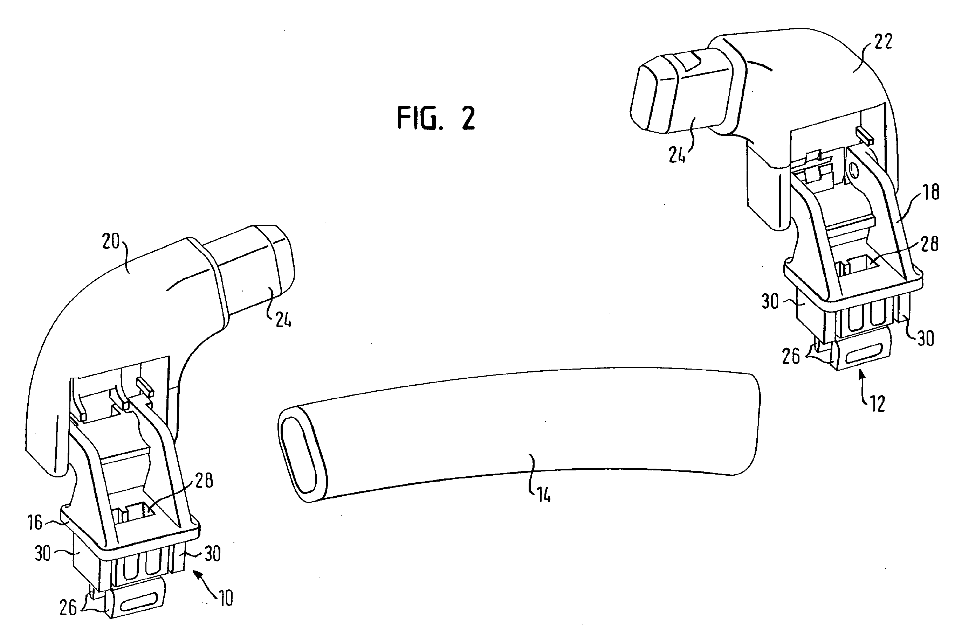

In den Figuren 1 und 2 ist ein Haltegriff 10 zusehen, der aus einem ersten Lager 10, einem zweiten Lager 12 und einem Griffteil 14 besteht. Die beiden Lager 10, 12 bestehen jeweils aus einem Montageteil 16 bzw. 18, das dafür vorgesehen ist, später am Fahrzeug befestigt zu werden, sowie einem Lagerteil 20 bzw. 22, das drehbar am Montageteil angebracht ist. Die beiden Lagerteile 20, 22 sind mit dem Griffteil 14 verbunden, so daß sich dieses zwischen den beiden Lagern 10, 12 erstreckt. Sowohl die Montageteile 16, 18 als auch die Lagerteile 20, 22 bestehen aus Kunststoff.

Das Griffteil 14 kann auf Haltefortsätze 24 aufgesetzt sein, die an den Lagerteilen 20, 22 ausgebildet sind, und dort verklebt, verschweißt, verclipst, verschraubt oder verstiftet sein. Alternativ ist möglich, daß das Griffteil einstückig mit den beiden Lagerteilen 20, 22 ausgeführt ist.

Die beiden Montageteile 16, 18 sind jeweils mit zwei Rastlaschen 26 versehen, die durch eine Montageöffnung im Fahrzeug hindurch gesteckt werden können und auf deren Rückseite einrasten. Zur Erhöhung der Haltekraft wird ein (nicht dargestellter) Keil durch eine Öffnung 28 in den Montageteilen 16, 18 hindurchgesteckt, so daß er zwischen den Rastlaschen 26 liegt und diese auseinanderdrückt. Zusätzlich zu den Rastlaschen 26 sind Anschlaglaschen 30 vorgesehen, die zur Verbesserung der Positionierung der Lager in den Montageöffnungen am Fahrzeug dienen.

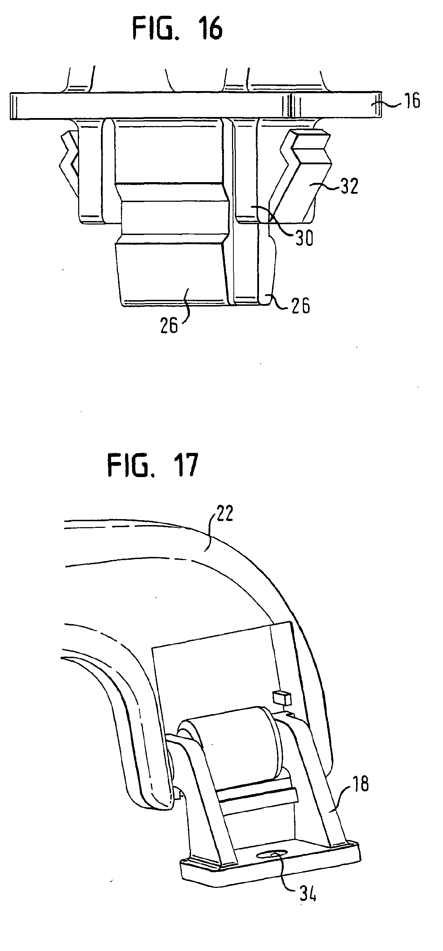

In den Figuren 16 und 17 sind alternative Möglichkeiten der Befestigung der Lager am Fahrzeug dargestellt. Bei der in Fig. 16 gezeigten Ausführungsform sind an den Anschlaglaschen 30 zusätzliche Halteclips 32 vorgesehen, die zur Vorverrastung der Lager bei der Montage am Fahrzeug dienen, bevor diese endgültig befestigt werden.

Bei der in Fig. 17 dargestellten Ausführungsform ist eine Öffnung 34 im Montageteil vorgesehen, durch die eine Befestigungsschraube hindurchgesteckt werden kann, mittels der das Lager am Fahrzeug verschraubt wird.

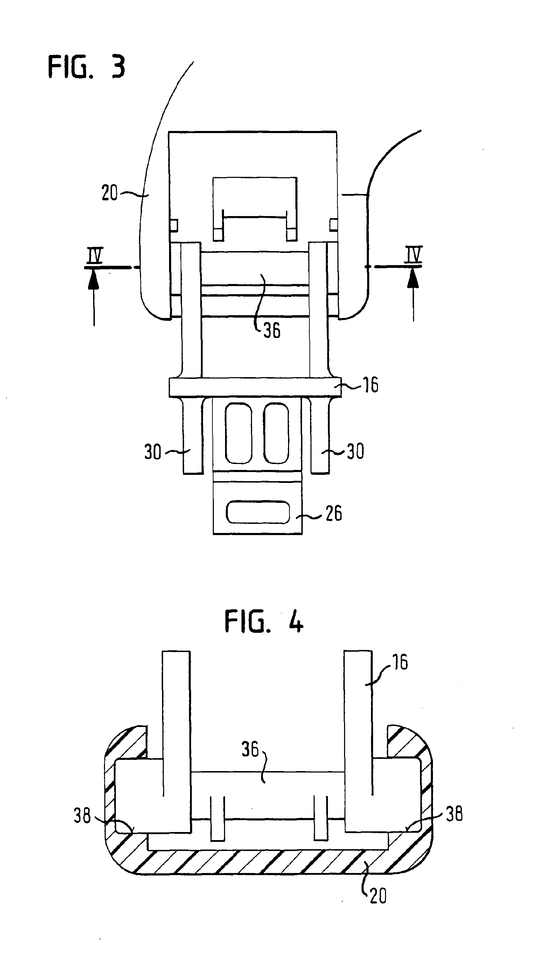

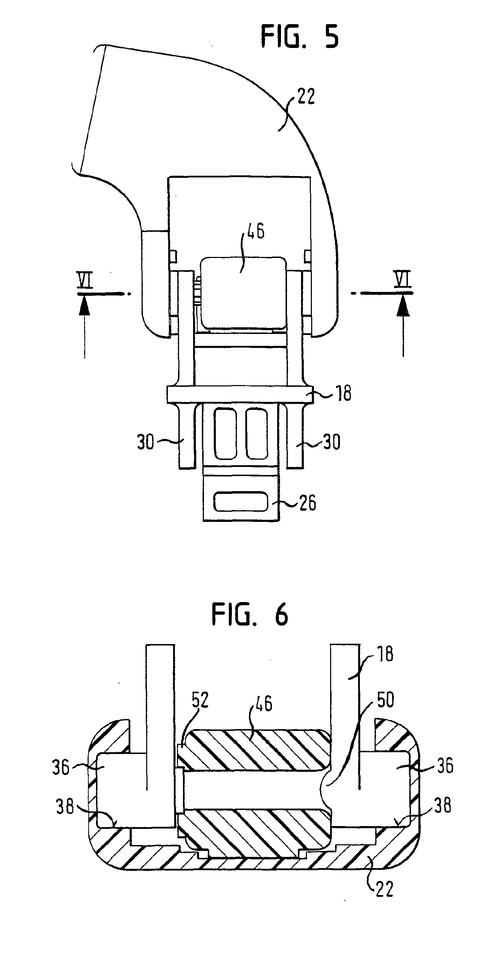

Der wesentliche Gesichtspunkt der erfindungsgemäßen Lager besteht darin, daß die Montageteile und die Lagerteile fest miteinander verbunden hergestellt werden, indem eine Lagerachse 36, welche die Montageteile mit den Lagerteilen verbindet, einstückig mit dem entsprechenden Montageteil ausgeführt wird und bei der Herstellung in Lageröffnungen 38 des Lagerteils eingespritzt wird. Wie in den Figuren 3 und 4 für das Lager 10 zu sehen ist, ist die Lagerachse 36 einstückig mit dem Montageteil 16 ausgeführt; die in axiale Richtung über das Lagerteile 16 hinausstehenden Enden ragen unmittelbar in Lageröffnungen 38 hinein, die im Lagerteil 20 ausgebildet sind. Die Lageröffnungen 38 sind in Umfangsrichtung geschlossen, stellen also in axialer Richtung betrachtet Vertiefungen mit kreisförmigem Querschnitt dar. Auf diese Weise ist die Lagerachse 36 in den Lageröffnungen 38 ohne Spiel und ohne die Gefahr aufgenommen, daß das Lagerteil 20 sich vom Montageteil 16 löst. Wie in den Figuren 5 und 6 zu sehen ist, ist die Lagerachse 38 für das Lager 12 in der Mitte unterbrochen, so daß die Lagerachse 36 sich aus zwei koaxialen Lagerzapfen zusammensetzt. Auch die bei den Lagerzapfen sind unmittelbar in die Lageröffnungen 38 des Lagerteils 22 eingespritzt.

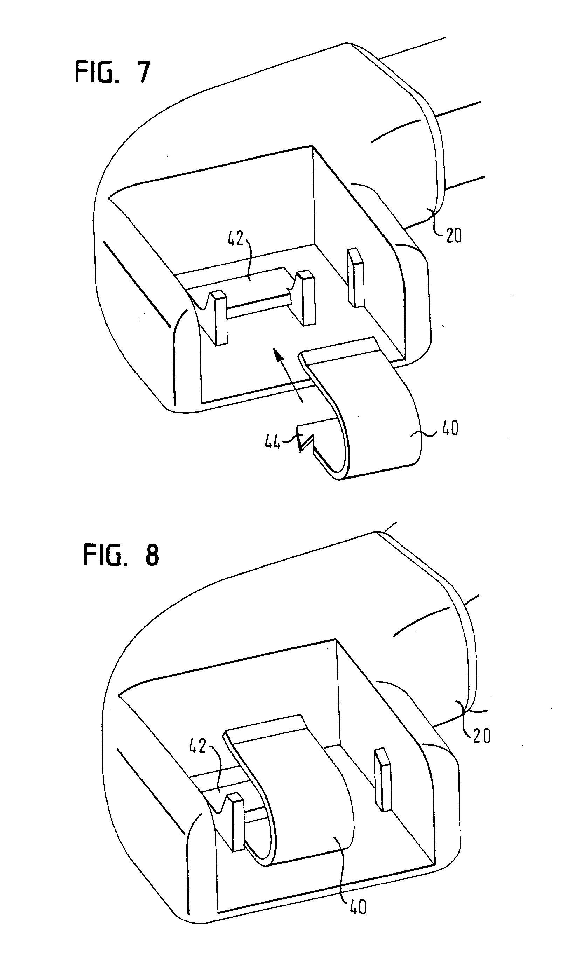

Am Lager 10 ist eine Rückstellfeder 40 (siehe insbesondere die Figuren 7 bis 10) vorgesehen, die am Lagerteil 20 befestigt ist und sich mit ihrem freien Schenkel am Montageteil 18 abstützt. Die Rückstellfeder 40 dient dazu, das Griffteil 14 in eine (zurückgeklappte) Ausgangstellung zu beaufschlagen. Zur Befestigung der Rückstellfeder 40 am Lagerteil 20 ist eine Rastführung 42 vorgesehen, in die ein mit Wiederhaken 44 versehenes Ende der Rückstellfeder 40 eingeschoben wird, so daß es dort einrastet oder sich im Kunststoff verkrallt.

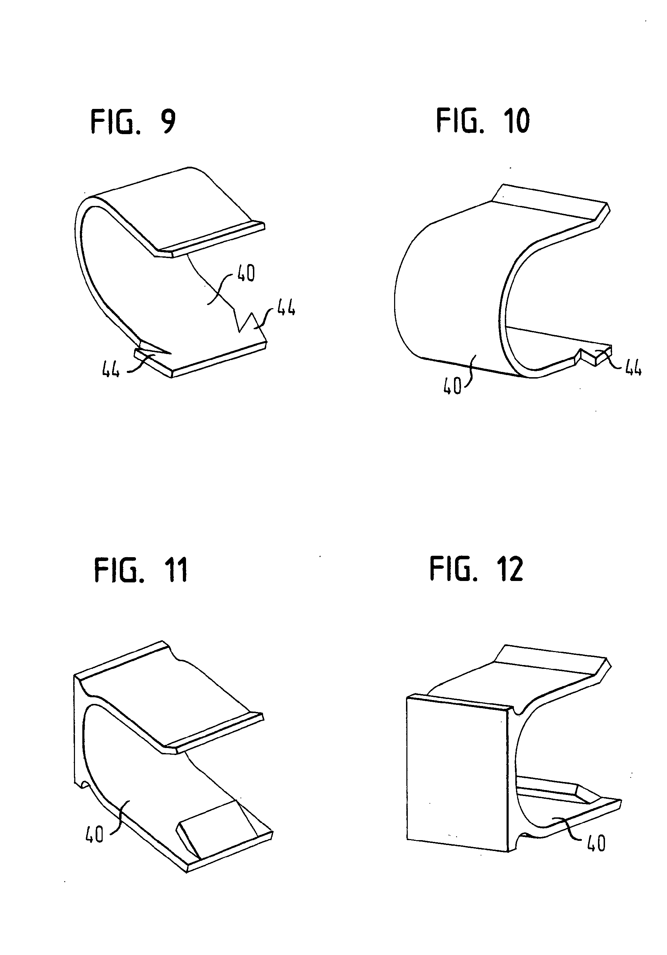

Die in den Figuren 9 und 10 gezeigte Rückstellfeder besteht aus Federstahl. Es ist alternativ möglich, eine Rückstellfeder aus einem geeigneten Kunststoff zu verwenden. Eine solche Rückstellfeder ist in den Figuren 11 und 12 gezeigt. Alternativ kann als Rückstellfeder eine Spiralfeder aus Stahl verwendet werden.

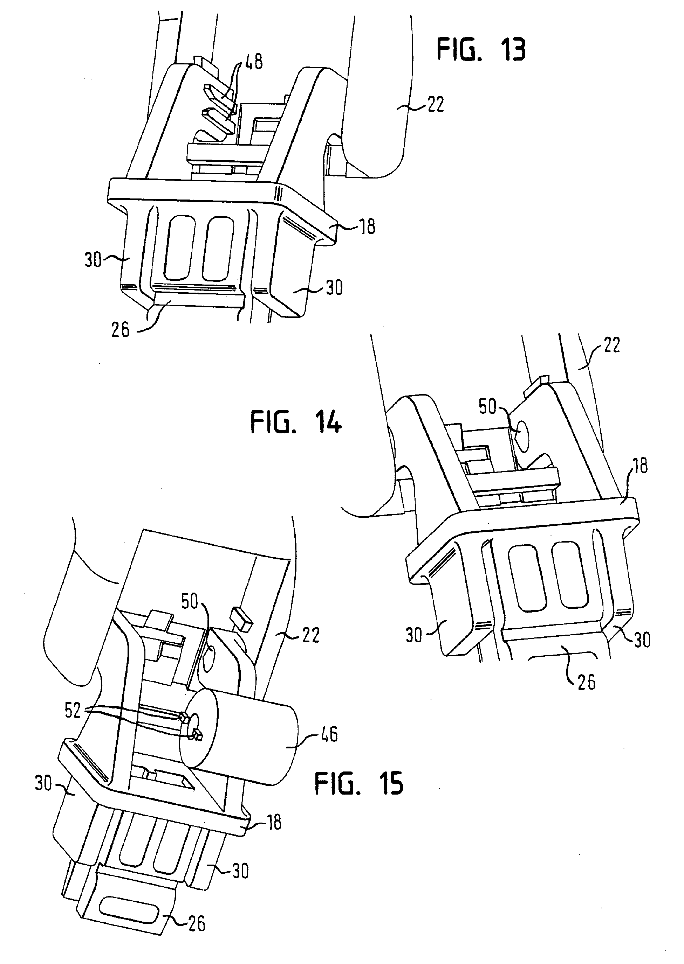

Am Lager 12 ist ein Dämpfer 46 (siehe die Figuren 5 und 6 sowie 15) vorgesehen, der dafür dient, die von der Rückstellfeder 40 hervorgerufene Rückstellbewegung des Griffteils 14 in die Ausgangstellung zu dämpfen. Der Dämpfer 46 ist hier ein Silikon-Dämpfer, der einen Widerstand durch Verdrängung eines Fluids erzeugt und als abgeschlossenes Bauteil ausgeführt ist, das in eine Aufnahme am Montageteil 18 eingesetzt wird. Diese Aufnahme besteht zwei Führungsstegen 48 (siehe Fig. 13) und einem Rastvorsprung 50 (siehe Fig. 14). In dieser Aufnahme rastet der Dämpfer 46 mit zwei Nasen 52 auf einer seiner Stirnseiten und einer Vertiefung auf der anderen Stirnseite ein (siehe Fig. 6).

## Patentansprüche

1. Lager (10, 12) für einen Fahrzeug-Haltegriff, mit einem Montageteil (16, 18), das dafür vorgesehen ist, am Fahrzeug befestigt zu werden, einem Lagerteil (20, 22), das dafür vorgesehen ist, mit einem Griffteil (14) verbunden zu werden, und einer Lagerachse (36), mittels der das Lagerteil (20, 22) drehbar am Montageteil (16, 18) gelagert ist, **dadurch gekennzeichnet, daß** die Lagerachse einstückig mit dem Montageteil (16, 18) ausgeführt und in das Lagerteil (20, 22) drehbar eingegossen ist.

2. Lager nach Anspruch 1, **dadurch gekennzeichnet, daß** das Lagerteil (20, 22) eine Lageröffnung (38) für die Lagerachse (36) hat und daß die Lageröffnung (38) in Umfangsrichtung geschlossen ist.

3. Lager nach Anspruch 1 oder Anspruch 2, **dadurch gekennzeichnet, daß** das Montageteil (16, 18) mit mindestens einer Befestigungsöffnung (33) für eine Befestigungsschraube versehen ist.

4. Lager nach einem der vorhergehenden Ansprüche, **dadurch gekennzeichnet, daß** das Montageteil (16, 18) mit mindestens einem Befestigungsclip (26) versehen ist.

5. Lager nach einem der vorhergehenden Ansprüche, **dadurch gekennzeichnet, daß** eine Rückstellfeder (40) vorgesehen ist, die das Lagerteil (20, 22) relativ zum Montageteil (16, 18) in eine Ausgangsstellung beaufschlagt.

6. Lager nach Anspruch 5, **dadurch gekennzeichnet, daß** die Rückstellfeder (40) aus Kunststoff besteht.

7. Lager nach Anspruch 5, **dadurch gekennzeichnet, daß** die Rückstellfeder eine Spiralfeder aus Metall ist.

8. Lager nach einem der vorhergehenden Ansprüche, **dadurch gekennzeichnet, daß** ein Dämpfer (46) vorgesehen ist, der einer Rückstellbewegung das Lagerteils (20, 22) relativ zum Montageteil (16, 18) eine Dämpfung entgegensetzt.

9. Haltegriff mit zwei Lagern nach einem der vorhergehenden Ansprüche und einen Griffteil (14), das mit den beiden Lagerteilen (20, 22) verbunden ist.

10. Haltegriff nach Anspruch 9, **dadurch gekennzeichnet, daß** das Griffteil (14) einstückig mit den beiden Lagerteilen (20, 22) ausgeführt ist.

11. Haltegriff nach Anspruch 9, **dadurch gekennzeichnet, daß** das Griffteil (14) als separates Bauteil ausgeführt ist.

12. Haltegriff nach Anspruch 11, **dadurch gekennzeichnet, daß** das Griffteil (14) mit den Lagerteilen (20, 22) verklebt ist.

13. Haltegriff nach Anspruch 11, **dadurch gekennzeichnet, daß** das Griffteil (14) mit den beiden Lagerteilen (20, 22) verclipst ist.

14. Haltegriff nach Anspruch 11, **dadurch gekennzeichnet, daß** das Griffteil (14) mit den beiden Lagerteilen (20, 22) verschraubt ist.

15. Haltegriff nach Anspruch 11, **dadurch gekennzeichnet, daß** das Griffteil (14) mit den beiden Lagerteilen (20, 22) verstiftet ist.
